# EUROPÄISCHE PATENTSCHRIFT

(11) **EP 1 035 016 B1**
(45) Veröffentlichungstag und Bekanntmachung des Hinweises auf die Patenterteilung: **17.11.2004**
(21) Anmeldenummer: 00100981.0
(22) Anmeldetag: 19.01.2000
(51) Int. Cl.: B64D 41/00, F02C 6/00

(54) **Hilfstriebwerk für ein Luftfahrzeug**
Auxiliary Power Unit for Aircraft
Unite de puissance auxiliaire pour aéronef

(30) Priorität: 12.03.1999 DE 19911018
(43) Veröffentlichungstag der Anmeldung: 13.09.2000
(73) Patentinhaber: DaimlerChrysler AG, 70567 Stuttgart (DE)
(72) Erfinder: Konrad, Gerhard, Dr., 70197 Stuttgart (DE); Lamm, Arnold, Dr., 89275 Elchingen (DE); ERDLE, Erich, Dr., D-88090 Immenstadt (DE)

(56) Entgegenhaltungen:
- EP-A- 0 391 595
- US-A- 4 090 359
- US-A- 5 413 879
- US-A- 5 541 014
- US-A- 5 693 201

## Beschreibung

Die Erfindung betrifft ein Hilfstriebwerk für Luftfahrzeuge. Die englischsprachigen Bezeichnung hierfür ist Auxiliary Power Unit, abgekürzt APU.

Aufgabe des Hilfstriebwerks an Bord von Luftfahrzeugen ist die Erzeugung von Druckluft für die Kabinenklimatisierung und für den Triebwerksstart sowie die Erzeugung von elektrischer Energie für die Bordstromversorgung. Das Hilfstriebwerk wird hauptsächlich dann eingesetzt, wenn sich das Luftfahrzeug am Boden befindet und ermöglicht eine Versorgung des Flugzeugs unabhängig von externen Quellen. Darüber hinaus dient das Hilfstriebwerk teilweise als Sicherheitssystem bei Triebwerksausfall zur Entlastung der verbleibenden Haupttriebwerke während des Flugs.

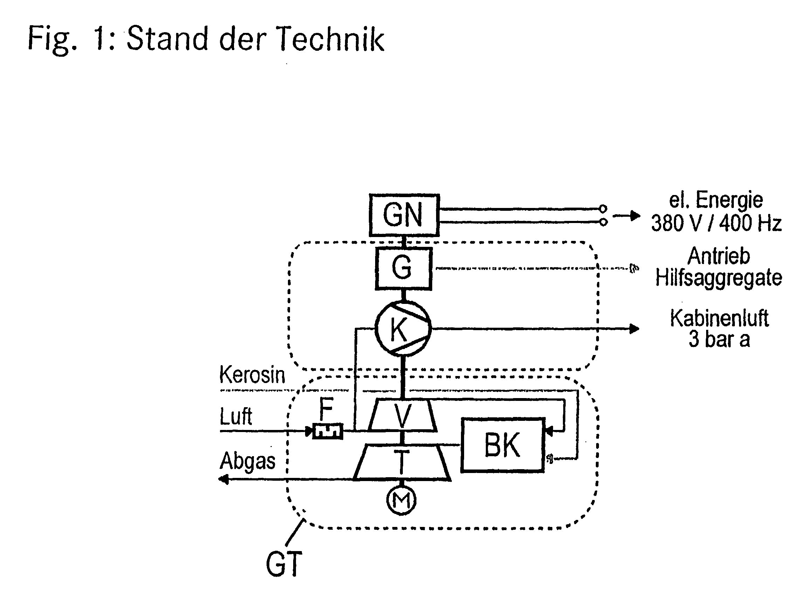

Derzeit im Einsatz befindliche Systeme weisen den in Fig. 1 schematisch wiedergegebenen Aufbau auf. Das dargestellte Hilfstriebwerk umfaßt eine Gasturbine GT, die als wesentliche Komponenten einen Verdichter V, eine Brennkammer BK sowie eine Turbine T aufweist. Die Turbine T treibt über eine gemeinsame Welle einen Kompressor K zur Drucklufterzeugung (z.B. 3 bar für die Versorgung der Kabinenklimaanlage) an. Ebenfalls mit der Turbine T gekoppelt ist ein Generator GN für die Erzeugung von elektrischer Energie (z.B. 380V/400Hz für die Bordstromversorgung). Über ein Getriebe G können mittels der Gasturbine GT weitere Hilfsaggregate angetrieben werden.

Nachteilig an den bekannten Hilfstriebwerken ist ihr relativ schlechter Wirkungsgrad, insbesondere hinsichtlich der Stromerzeugung. Ihr Betrieb ist außerdem mit hohen Abgas- und Lärmemissionen verbunden.

Darüber hinaus ist im Fahrzeugbau der Einsatz von Brennstoffzellen zu Antriebszwecken als auch für die Lieferung von elektrischer Energie bekannt.

Der Erfindung liegt die Aufgabe zugrunde, ein Hilfstriebwerk zu schaffen, mit der die Stromerzeugung an Bord mit hohem Wirkungsgrad und unter Emissionsreduzierung möglich ist.

Diese Aufgabe wird mit dem Gegenstand des Anspruchs 1 gelöst. Vorteilhafte Ausführungen der Erfindung sind Gegenstand weiterer Ansprüche.

Gemäß der Erfindung wird der Stromerzeugungsteil des konventionellen Hilfstriebwerks durch ein Brennstoffzellensystem ersetzt.

Der von der Brennstoffzelle benötigte Wasserstoff kann bei konventionell angetriebenen Flugzeugen durch eine geeignete Wasserstofferzeugungseinheit, insbesondere einer Reformerstufe, aus dem an Bord vorhandenen Flugbenzin/Kerosin erzeugt werden. Alternativ könnte der Wasserstoff zum Betrieb des Hilfstriebwerks auch in einem Behälter mitgeführt werden.

Bei einem Wasserstoffflugzeug, bei dem der für den Vortrieb des Luftfahrzeugs mitgeführte Treibstoff Flüssigwasserstoff ist, kann die Brennstoffzelle direkt mit dem an Bord vorhandenen Wasserstoff versorgt werden.

Insgesamt kann damit sowohl bei konventionellen Flugzeugen als auch bei Wasserstoffflugzeugen die elektrische Energie aus dem an Bord ohnehin vorhandenen Treibstoff für den Vortrieb des Luftfahrzeugs erzeugt werden. Alternativ ist auch eine externe Versorgung am Boden möglich.

Für die Luftversorgung der Brennstoffzelle können insbesondere die folgenden Ausführungen Verwendung finden:

In einer bevorzugten Ausführung erfolgt die Verdichtung der Brennstoffzellen-Prozeßluft durch den mit der Turbine gekoppelten Kompressor, der auch die Druckluft für die Bordklimaanlage erzeugt.

In einer weiteren Ausführung wird die Brennstoffzelle über den Verdichter der Gasturbine mit Luft versorgt.

Alternativ können auf der Turbinenwelle eine oder mehrere zusätzliche Kompressorstufen speziell für die Verdichtung der Brennstoffzellen-Prozeßluft vorhanden sein.

Die Luftversorgung der Brennstoffzelle kann auch durch einen im Hilfstriebwerk zu Kühlzwecken vorhandenen Kühlventilator erreicht werden. Die zugeführte Prozeßluft weist in dieser Ausführung ein relativ niedriges Druckniveau auf.

Falls an Bord eine pneumatische Bordklimaanlage mit Entspannungsturbine vorhanden ist, so kann diese Entspannungsturbine zur Zuführung und Verdichtung der Prozeßluft eingesetzt werden.

Um den Energieinhalt der Brennstoffzellenabgase zu nutzen, kann sowohl das Anodenabgas wie auch das Kathodenabgas in die Brennkammer der Gasturbine eingeleitet werden. Typischerweise kann in der Brennstoffzelle nur ein Anteil von ca. 80 % des zugeführten Wasserstoffs genutzt werden. Der Energieinhalt des Abgases reicht zur Deckung von ca. 30 bis 50 % der für die Luftversorgung der Brennstoffzelle aufzubringenden Kompressionsenergie aus.

Als Brennstoffzelle kann insbesondere eine PEM-Brennstoffzelle (Proton Exchange Membrane) eingesetzt werden.

Zusammengefaßt ergeben sich folgende Vorteile des erfindungsgemäßen Hilfstriebwerks:
- Stromerzeugung mit hohem Wirkungsgrad und aus Treibstoff, der bereits an Bord des Luftfahrzeugs vorhanden ist,
- Reduzierung des Treibstoffverbrauchs sowie der Abgas- und Lärmemissionen;
- Weitgehende Entkopplung von Stromerzeugung und Luftkompression;
- Steigerung des Wirkungsgrads insbesondere auch im Teillastbetrieb;
- kein eigener Kompressor für die Luftversorgung der Brennstoffzelle erforderlich, vielmehr kann auf die bereits an Bord vorhandenen Einrichtungen zur Luftkompression zurückgegriffen werden.

Die Erfindung wird anhand von Zeichnungen näher erläutert. Es zeigen:
- Fig. 1: ein bekanntes Hilfstriebwerk, wie in der Beschreibungseinleitung erläutert;
- Fig. 2: eine erste Ausführung des erfindungsgemäßen Hilfstriebwerks,
- Fig. 3: eine weitere Ausführung des erfindungsgemäßen Hilfstriebwerks.

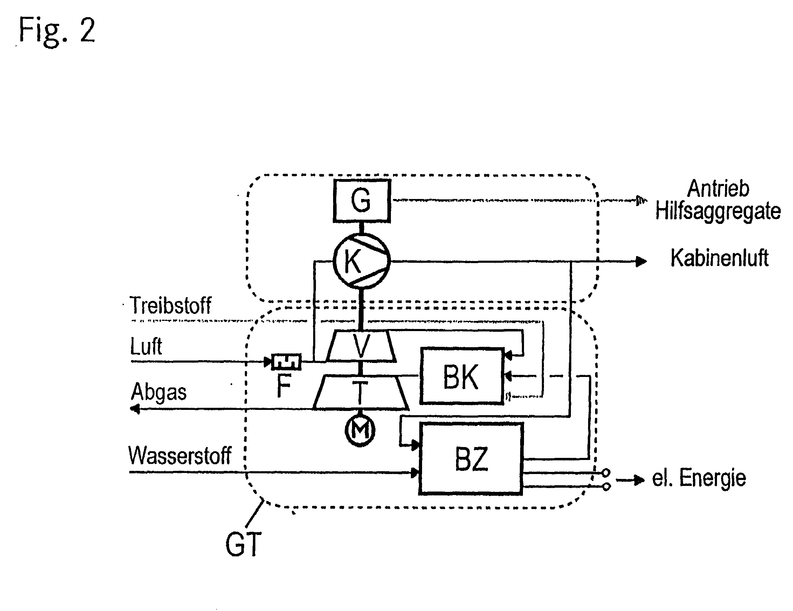

Fig. 2 zeigt eine beispielhafte Ausführung des erfindungsgemäßen Hilfstriebwerks für ein Wasserstoffflugzeug. Bei einem Wasserstoffflugzeug werden die Haupttriebwerke für den Vortrieb des Flugzeugs mit Wasserstoff versorgt, so daß unabhängig vom Hilfstriebwerk bereits Wasserstoff an Bord vorhanden ist.
Das dargestellte Hilfstriebwerk umfaßt eine Gasturbine GT mit einem Verdichter V zur Verdichtung der über einen Luftfilter F angesaugten Umgebungsluft, eine mit Wasserstoff betriebene Brennkammer BK sowie eine Turbine T, die die kinetische Energie des Brennkammerabgase in Wellenleistung umwandelt. Verdichter V und Turbine T sind miteinander gekoppelt und sitzen auf derselben Welle. Ebenfalls mit der Turbine T gekoppelt ist ein Kompressor K zur Erzeugung von Druckluft für die Kabinenluftklimatisierung. Die Kabinenluft wird in dieser beispielhaften Ausführung aus dem Einlauf der Gasturbine GT abgezweigt. Über das ebenfalls mit der Turbine T gekoppelte Getriebe G können ggf. weitere Aggregate (z.B. Kraftstoffpumpe, Kühlventilator, Schmiermittelversorgung) angetrieben werden. Mit M ist der elektrische Starter/Anlasser des Hilfstriebwerks gekennzeichnet. Erfindungsgemäß wird die elektrische Energie für die Bordstromversorgung von einer Brennstoffzelle BZ erzeugt. Der Wasserstoff für die Brenngasversorgung der Brennstoffzelle BZ wird den Wasserstofftanks des Luftfahrzeugs entnommen. Die Versorgung der Brennstoffzelle BZ mit Prozeßluft erfolgt in dieser Ausführung über den mit der Turbine T gekoppelten Kompressor K, der auch die Druckluft für die Kabinenluftklimatisierung erzeugt. Dazu wird aus der Druckluftleitung für die Kabinenluft Druckluft abgezweigt und an den Anodeneingang der Brennstoffzelle BZ geführt. Um den Energieinhalt des Brennstoffzellenabgases zu nutzen, wird das Abgas der Brennstoffzelle BZ in die Brennkammer BK der Gasturbine GT geführt.

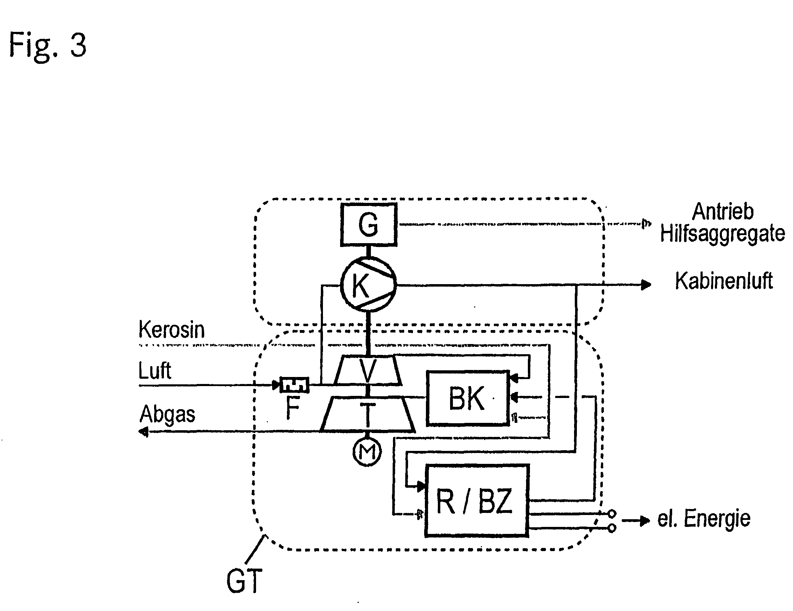

Fig. 3 zeigt eine beispielhafte Ausführung des erfindungsgemäßen Hilfstriebwerks für ein konventionell, d.h. mit Kerosin/Flugbenzin angetriebenes Flugzeug. Der Aufbau des dargestellten Hilfstriebwerks entspricht im wesentlichen dem in Fig. 2 gezeigten Hilfstriebwerk. Zur Vermeidung von Wiederholungen wird darauf verwiesen. Anders als in dem Hilfstriebwerk nach Fig. 2 wird der Wasserstoff für die Brennstoffzelle in dieser Ausführung aus dem mitgeführten Kerosin on-board erzeugt. Dazu wird der Brennstoffzelle BZ eine - hier nicht im Einzelnen dargestellte - Reformerstufe R vorgeschaltet.
Die Brennkammer BK der Gasturbine GT wird in dieser Ausführung mit Kerosin/Flugbenzin betrieben. Das Restgas des Brennstoffzellensystems wird wiederum der Brennkammer BK der Gasturbine GT zugeführt. Dadurch kann dessen Energiegehalt genutzt werden. Besonders vorteilhaft ist dabei, daß durch die Mitverbrennung des Wasserstoffs eine erhebliche Emissionsminderung im Abgas erreicht wird.

## Patentansprüche

1. Hilfstriebwerk für ein Luftfahrzeug, umfassend
- eine Gasturbine (GT) mit einer Brennkammer (BK), einem Verdichter (V) sowie einer Turbine (T),
- einem mit der Turbine (T) gekoppelten Kompressor (K) für die Erzeugung von Druckluft,
**dadurch gekennzeichnet, daß** zur Erzeugung elektrischer Energie eine Brennstoffzelle (BZ) vorhanden ist.

2. Hilfstriebwerk nach Anspruch 1, **dadurch gekennzeichnet, daß** das Anoden- und/oder das Kathoden-Abgas der Brennstoffzelle (BZ) der Brennkammer (BK) der Gasturbine (GT) zugeführt wird.

3. Hilfstriebwerk nach einem der vorangehenden Ansprüche, **dadurch gekennzeichnet, daß** die Verdichtung der der Brennstoffzelle (BZ) zuzuführenden Prozeßluft mittels des mit der Turbine (T) gekoppelten Kompressors (K) erfolgt.

4. Hilfstriebwerk nach einem der vorangehenden Ansprüche, **dadurch gekennzeichnet, daß** die Verdichtung der der Brennstoffzelle (BZ) zuzuführenden Prozeßluft mittels des Verdichters (V) der Gasturbine (GT) erfolgt.

5. Hilfstriebwerk nach einem der vorangehenden Ansprüche, **dadurch gekennzeichnet, daß** für die Verdichtung der der Brennstoffzelle (BZ) zuzuführenden Prozeßluft eine oder mehrere, mit der Turbine (T) gekoppelte zusätzliche Kompressorstufen vorhanden sind.

6. Hilfstriebwerk nach einem der vorangehenden Ansprüche, **dadurch gekennzeichnet, daß** es für Kühlzwecke einen Kühlventilator aufweist, wobei dieser Kühlventilator zusätzlich für die Verdichtung der der Brennstoffzelle (BZ) zuzuführenden Prozeßluft eingesetzt wird.

7. Hilfstriebwerk nach einem der vorangehenden Ansprüche, **dadurch gekennzeichnet, daß** für die Verdichtung der der Brennstoffzelle (BZ) zuzuführenden Prozeßluft die Entspannungsturbine einer pneumatischen Bordklimaanlage des Luftfahrzeugs eingesetzt wird.

8. Hilfstriebwerk nach einem der vorangehenden Ansprüche, **dadurch gekennzeichnet, daß** eine Wasserstofferzeugungseinheit vorhanden ist, mit welcher der der Brennstoffzelle (BZ) zuzuführende Wasserstoff on-board erzeugt wird.

9. Hilfstriebwerk nach Anspruch 8, **dadurch gekennzeichnet, daß** die Wasserstofferzeugungseinheit Wasserstoff aus dem für den Vortrieb des Luftfahrzeugs an Bord mitgeführten Treibstoffs erzeugt.

10. Hilfstriebwerk nach einem der vorangehenden Ansprüche, **dadurch gekennzeichnet, daß** an Bord des Luftfahrzeugs Behälter für die Speicherung von Wasserstoff vorhanden sind, aus denen die Brennstoffzelle mit Wasserstoff versorgt wird.

11. Verwendung eines Hilfstriebwerks nach Anspruch 10 in einem Wasserstoffflugzeug.

## Claims

1. Auxiliary power unit for an aircraft, comprising
- a gas turbine (GT) having a combustion chamber (BK), a compressor arrangement (V) and a turbine (T),
- a compressor (K) for generating compressed air, which is coupled to the turbine (T),
**characterized in that** there is a fuel cell (BZ) for generating electrical energy.

2. Auxiliary power unit according to Claim 1, **characterized in that** the anode exhaust gas and/or the cathode exhaust gas from the fuel cell (BZ) is fed to the combustion chamber (BK) of the gas turbine (GT).

3. Auxiliary power unit according to one of the preceding claims, **characterized in that** the compression of the process air to be fed to the fuel cell (BZ) is carried out by means of the compressor (K) which is coupled to the turbine (T).

4. Auxiliary power unit according to one of the preceding claims, **characterized in that** the compression of the process air to be fed to the fuel cell (BZ) is carried out by means of the compressor arrangement (V) of the gas turbine (GT).

5. Auxiliary power unit according to one of the preceding claims, **characterized in that** one or more additional compressor stages coupled to the turbine (T) are provided for the compression of the process air to be fed to the fuel cell (BZ).

6. Auxiliary power unit according to one of the preceding claims, **characterized in that** for cooling purposes it has a cooling fan, this cooling fan additionally being used to compress the process air to be fed to the fuel cell (BZ).

7. Auxiliary power unit according to one of the preceding claims, **characterized in that** the expansion turbine of a pneumatic on-board air-conditioning system of the aircraft is used to compress the process air to be fed to the fuel cell (BZ).

8. Auxiliary power unit according to one of the preceding claims, **characterized in that** there is a hydrogen-generating unit which is used to generate the hydrogen to be fed to the fuel cell (BZ) on board.

9. Auxiliary power unit according to Claim 8, **characterized in that** the hydrogen-generating unit generates hydrogen from the fuel which is carried on board to propel the aircraft.

10. Auxiliary power unit according to one of the preceding claims, **characterized in that** there are hydrogen-storage tanks on board the aircraft, from which the fuel cell is supplied with hydrogen.

11. Use of an auxiliary power unit according to Claim 10 in a hydrogen aeroplane.

## Revendications

1. Unité de puissance auxiliaire pour un aéronef, comprenant
- une turbine à gaz (GT) avec une chambre de combustion (BK), une soufflante (V) ainsi qu'une turbine (T),
- un compresseur (K) couplé à la turbine (T) pour la production d'air comprimé,
**caractérisée en ce qu'**il existe une cellule à combustible (BZ) pour la production d'énergie électrique.

2. Unité de puissance auxiliaire selon la revendication 1, **caractérisée en ce que** le gaz d'anode et/ou de cathode de la cellule à combustible (BZ) est amené à la chambre de combustion (BK) de la turbine à gaz (GT).

3. Unité de puissance auxiliaire selon l'une des revendications précédentes, **caractérisée en ce que** la compression de l'air nécessaire au procédé devant être amené à la cellule à combustible (BZ) est réalisée par le biais du compresseur (K) couplé à la turbine (T).

4. Unité de puissance auxiliaire selon l'une des revendications précédentes, **caractérisée en ce que** la compression de l'air nécessaire au procédé devant être amené à la cellule à combustible (BZ) est réalisée par le biais de la soufflante (V) de 1a turbine à gaz (GT).

5. Unité de puissance auxiliaire selon l'une des revendications précédentes, **caractérisée en ce qu'**il existe un ou plusieurs étages de compresseur supplémentaires couplés à la turbine (T) pour la compression de l'air nécessaire au procédé devant être amené à la cellule à combustible (BZ).

6. Unité de puissance auxiliaire selon l'une des revendications précédentes, **caractérisée en ce qu'**elle présente, à des fins de refroidissement, un ventilateur de refroidissement, ce ventilateur de refroidissement étant en outre mis en oeuvre pour la compression de l'air nécessaire au procédé devant être amené à la cellule à combustible (BZ).

7. Unité de puissance auxiliaire selon l'une des revendications précédentes, **caractérisée en ce que** la compression de l'air nécessaire au procédé devant être amené à la cellule à combustible (BZ) est réalisée par le biais de la turbine à cycle d'expansion d'un système de climatisation pneumatique embarqué de l'aéronef.

8. Unité de puissance auxiliaire selon l'une des revendications précédentes, **caractérisée en ce qu'**il existe une unité de production d'hydrogène produisant à bord l'hydrogène devant être amené à la cellule à combustible (BZ).

9. Unité de puissance auxiliaire selon la revendication 8, **caractérisée en ce que** l'unité de production d'hydrogène produit l'hydrogène à partir du carburant servant à la propulsion de l'aéronef et transporté à bord de celui-ci.

10. Unité de puissance auxiliaire selon l'une des revendications précédentes, **caractérisée en ce que** des conteneurs pour le stockage d'hydrogène existent à bord de l'aéronef, depuis lesquels la cellule à combustible est alimentée en hydrogène.

11. Utilisation d'une unité de puissance auxiliaire selon la revendication 10 dans un avion à hydrogène.
